# EUROPEAN PATENT APPLICATION

(11) **EP 4 403 466 A1**
(43) Date of publication of application: **24.07.2024**
(21) Application number: 24151250.8
(22) Date of filing: 10.01.2024
(51) Int. Cl.: B64C 25/42, B60T 8/17, B60T 8/1755, B64C 25/50

(54) **SYSTEM FOR CONTROLLING AIRCRAFT GROUND MANOEUVRES**

(30) Priority: 19.01.2023 GB 202300829
(71) Applicant: Airbus Operations Limited, Bristol BS34 7PA (GB)
(72) Inventor: BIDMEAD, Ashley, Bristol, BS34 7PA (GB); JOHNSON, Mark, Bristol, BS34 7PA (GB)
(74) Representative: Abel & Imray LLP

(57) **Abstract**

An aircraft (101) includes a ground manoeuvre control system (120) that automatically steers a nose landing gear wheel (112) to compensate for asymmetrical braking of the wheels (104) of the aircraft resulting from a failure on one side in comparison to the other. A control system (control unit 130) detects such a failure in order to be able to effect such automatic steering. The system (120) may be retrofitted by the installation of software (132) on an existing aircraft, having a braking and steering computer system (138) with a pre-existing steering control functional block (134) and a pre-existing braking control functional block (136).

## Description

### BACKGROUND OF THE INVENTION

The present disclosure relates to aircraft ground manoeuvres.

The present invention concerns the automation, or partial automation, of an aircraft while performing ground manoeuvres for example as part of the landing phase of the aircraft. More particularly, but not exclusively, this invention concerns a control system for use with an aircraft. The invention also concerns a method for controlling an aircraft while moving along a runway, and other related subject matter.

There is a desire to reduce the number of pilots needed to safely fly an aircraft or alternatively to improve aircraft safety. Having only a single pilot in the cockpit of an aircraft, brings with it the issue of pilot incapacitation. In order to improve safety in connection with single pilot aircraft operation, it is desirable to provide systems that can cope with various scenarios in the event of pilot incapacitation.

There are various examples in the prior art of automating aspects of operation of an aircraft that might normally be performed manually by flight crew.

US10081346 discloses a braking control system for an aircraft including a health monitoring system and a task manager for automatically self-reconfiguring the braking control system in the event that the health monitoring system judges a failure of one or more of the braking wheels or sensor signals.

US8108086 discloses an aircraft guidance and piloting system that automatically guides and pilots an aircraft in the event a pilot is unable to guide or pilot the aircraft. The control unit guides and pilots the aircraft to an alternative airport for landing.

US2022/0058970 discloses an autoland system and process for landing an aircraft without pilot intervention.

US2021/0287560 discloses flight guidance methods, systems and aircraft systems providing assist-to-land and emergency land functions.

WO2012/145608 discloses a system for autonomously landing an aircraft which may include a controller configured to land the aircraft at the landing destination.

US8521365 discloses a device including elements for automatically controlling an aircraft on the ground along the lateral axis, by a dissymmetrical use of the engines and/or brakes of the aircraft.

Thus there exist many different systems on an aircraft that assist flight crew in controlling the aircraft on the ground, some of which facilitating automation to varying degrees, but possibly not being able to cope with particular scenarios, especially when the landing of the aircraft is not in ideal conditions for example. There are various ways in which such systems can be used, but there still exist opportunities to improve the way in which such systems integrate multiple functions/requirements of the aircraft's control during landing, to improve automation of aircraft manoeuvres and/or to reduce the need for flight-crew intervention/interaction with aircraft systems that are used in controlling aircraft manoeuvres. Some of the prior art systems are complicated and/or would require major changes to be made to an existing commercial aircraft in order for the systems to be safely and fully implemented.

The present invention seeks to mitigate one or more of the above-mentioned problems. Alternatively or additionally, the present invention seeks to provide an improved method or system for controlling ground manoeuvres of an aircraft.

### SUMMARY OF THE INVENTION

The present invention provides, according to a first aspect, a control system for use with an aircraft that automatically steers a nose landing gear ("NLG") wheel to compensate for asymmetrical braking of the wheels of the aircraft resulting from a failure. The system has particular use when the failure is of a part of the braking system of the aircraft that, without other action being taken, would lead to differential braking being applied in response to a command for braking (e.g. non-differential braking) being issued (e.g. issued by a member of the flight crew of the aircraft). The control system is configured to detect such a failure in order to be able to effect such automatic steering, for example the control system may be arranged to receive a signal that indicates a failure and the type of failure (at least which of the port-side wheel brakes and the starboard-side wheel brakes have failed). The system may be configured to operate when there is a failure such that no braking can be applied on only one side of the aircraft (i.e. either port or starboard). In embodiments, the system is thus arranged such that in response to both (a) the detection of a brake-system failure and (b) a command for non-differential braking (e.g. a level of braking that should, without the failure, result in the same level of braking being applied to the port-side wheels and the starboard-side wheels) being issued (e.g. by a member of the flight crew of the aircraft), automatically steering the NLG wheel to compensate, at least in part, for the yaw moment caused by the braking applied to the wheels.

In embodiments, the system is thus able to increase the safety of the aircraft in that, in the event of a brake failure on one side of the aircraft, there is a reduction in the risk of the aircraft veering off course (i.e. experiencing a large excursion from the centreline of the runway or taxiway) caused by uncommanded differential braking occurring during application of the brakes of the main landing gear wheels by flight crew.

It will be appreciated that the system may, in certain scenarios, only be able to partly compensate for the inadvertent differential braking. However, some automatic compensation being applied will be better than no automatic measures being taken, and could make the difference between the aircraft veering laterally off a runway or taxiway (a "lateral excursion") and merely veering off course whilst remaining within the bounds of the runway or taxiway.

The control system may be configured to receive input data relating to the current state of the wheel brakes and/or other aspects of the braking system(s) of the aircraft.

The automatic steering of the NLG wheel effected by the control system may be in the form of issuing a signal or other output which causes the NLG to rotate in a certain direction (clockwise or anticlockwise depending on the side of the aircraft on which the brakes have failed) by a certain amount (which may be a fixed amount or may vary according to other factors) and/or to a certain angular position (e.g. a certain number of degrees off-set from the neutral angular position of the NLG).

It may be that the control system commands a certain amount of automatic steering of the NLG wheel in dependence on one or more variables. For example, the amount of automatic steering may be determined in dependence on the level of braking commanded, for example increased steering being commanded in response to increased braking being commanded. The relationship between steering and braking may be linear/proportional for at least part of a range of possible levels of braking being commanded. The amount of automatic steering of the NLG wheel may be determined in dependence, at least in part, on a speed of the aircraft (i.e. groundspeed). The risk of the NLG skidding and/or being less effective at steering increases with speed of the aircraft on the runway/taxiway. The amount of automatic steering of the NLG wheel may be subject to one of more limits, for example a maximum angular deflection from the neutral rotational position (i.e. neutral being 0 degrees) of the NLG wheel. It may for example be preferable for the system to be limited to causing an angular deflection of the NLG wheel of no greater than a threshold angle from its neutral position (the threshold angle for example being between 2 degrees and 10 degrees, and optionally being less than 5 degrees). The maximum angular deflection of the NLG wheel may depend on the speed of the aircraft. For example, the maximum angular deflection of the NLG wheel may be a first value (e.g. 3 degrees) for speeds below a first threshold value, and a second value (e.g. 1 degree) for speeds above a second threshold value. The second threshold value may equal the first threshold value for example. The second value for maximum angular deflection is preferably less than the first value maximum angular deflection.

According to a further aspect of the invention there is provided an aircraft comprising a control system according to any aspect of the invention as described or claimed herein. The aircraft will typically be fitted with a NLG and associated wheel, and at least two main landing gear ("MLG") sets, with associated brake(s) and braking systems - with the control system being integrated with the rest of the aircraft. The aircraft may be one that is not equipped with any centrally aligned (i.e. in line with the central longitudinal axis of the aircraft) main landing gear. It may be that there are only three sets of landing gear, namely the single NLG and two sets of MLG. The wheel brakes on the MLG of the aircraft may include one or more brake packs, which cause braking via friction. The wheel brakes on the MLG of the aircraft may include one or more brakes, which cause deceleration at least in part by magnetic forces.

The aircraft may comprise a steering control module, for example a dedicated steering control module which has no other functions to perform other than steering control. The aircraft may comprise a braking control module, for example a dedicated braking control module which has no other functions to perform other than braking control. The steering control module may for example be separate from the braking control module. The control system may be configured to interact with, or comprise at least part of, both the steering control module and the braking control module. The steering control module and the braking control module may be provided by separate hardware. In some aircraft, the steering control module and the braking control module may be provided by common hardware for example being provided as separate functional blocks on the same computer. It may be that the steering control module of the aircraft controls other aspects of the steering of the NLG wheel (i.e. independently of the control system of the invention that automatically steers the NLG wheel - for example, the steering control module controls steering of the NLG during normal fault-free operations). It may be that braking control module controls other aspects of the braking of the main landing gear wheels (i.e. independently of the control system of the invention that detects failure in the MLG brakes - for example, the braking control module controls braking of the MLG wheels during normal fault-free operations). Thus it may be that certain aspects of the steering controlled by the steering control module are wholly independent of certain aspects of the braking controlled by the braking control module. It may be that the function of the control system (e.g. at least insofar as it causes automatic steering of the NLG wheel) is provided in software.

The present invention has particular application in relation to an aircraft used, or specifically configured for use, for single pilot operations or no-pilot operations.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and more preferably more than 50 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more.

The present invention provides, according to a yet further aspect, a method of controlling the steering of an aircraft while the aircraft is moving along the ground (e.g. along a runway or taxiway surface). There may be a step of detecting failure of all wheel brakes on a first side of the aircraft, being the port-side or the starboard-side, the wheel brakes on the opposite side still being at least partly operational. There may be a step of issuing a wheel braking command causing a braking force to be applied to the aircraft, which results in an asymmetry of braking force being applied to the wheels on the opposite side as compared to the first side. There may then, as a consequence, be a step of automatically steering a NLG wheel towards the first side, thus compensating at least in part for the asymmetry of braking force. The automatic steering may be performed by a suitably configured control unit, which will typically be implemented electronically and/or in software. The automatic compensating of the asymmetry of braking force is preferably limited to changing the steering angle of the NLG wheel. The system(s) required in order to perform automatic compensating of the asymmetry of braking force may thus be relatively straightforward to design and implement.

The method may include a control unit sending an output demand to a nose-wheel steering mechanism. The method may include a control unit (e.g. the same control unit) receiving data from sensors on board the aircraft that indicates a fault in the braking system of the MLG wheels on the aircraft.

As alluded to above, the invention may be at least partly embodied in software. As such, the method of the invention may be a computer-implemented method wherein the method includes a computer performing those steps that are carried out by the control system of the invention as described or claimed herein.

There is also provided a computer program product for implementing those aspects of the invention that can be provided by software, for example on one or more suitable computer system(s) on the aircraft, for example on a computer and/or on a programmable control unit. The computer program product comprises instructions which, when the program is executed on a computer system, cause the system to be in accordance with an aspect of the present invention as claimed or described herein. The computer program product when implemented may cause interaction between a steering control module and a braking control module, both the steering control module and the braking control module being implemented, at least in part, by one or more computers (which, in use, would be located on-board the aircraft). The steering control module may for example be configured to receive inputs and as a result to output a signal that controls or influences the angle of steering of the NLG wheel of the aircraft. The braking control module may for example be configured to receive inputs and as a result to output a signal that controls or influences the amount of braking applied to one or more main landing gear wheels of the aircraft. The braking control module may for example be configured to receive inputs that indicate a fault in the braking system, such as a complete loss of braking on one side of the aircraft. The steering control module and the braking control module may be at least partly implemented in one or more computer system(s) of the aircraft (e.g. one or two segregated computer systems), in software as separate functional blocks. The functional blocks may for example be independent of each other, apart from the interaction caused by the computer program product of the present invention.

There is also provided a method of converting an existing aircraft into an aircraft according to the present invention (e.g. retrofitting the invention to an aircraft that is already in service). Such an existing aircraft will typically include a steering control module as described above (e.g. one which is configured to receive inputs and as a result to output a signal that controls or influences the angle of steering of a NLG wheel of the aircraft). Such an existing aircraft will typically include a braking control module as described above (e.g. one which is configured to receive inputs and as a result to output a signal that controls or influences the amount of braking applied to one or more MLG wheels). The braking control module will typically be functionally independent of the steering control module. The method may include a step of installing software (e.g. in the form of a computer program product as described or claimed herein) such that when installed the software causes the required interaction between the steering control module and the braking control module to put the present invention into effect.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
Figure 1 shows a top down view of an aircraft including a ground manoeuvre control system according to a first embodiment of the invention;
Figure 2 shows a front view of the aircraft of Figure 1;
Figure 3 shows in further detail the ground manoeuvre control system of the first embodiment;
Figures 4 and 5 are graphs showing how the ground manoeuvre control system of the first embodiment performs under certain scenarios;
Figure 6 is a flow diagram showing a method of controlling the steering of an aircraft on a runway according to a second embodiment of the invention; and
Figure 7 shows the retrofitting of an aspect of a single pilot control system according to a third embodiment of the invention.

### DETAILED DESCRIPTION

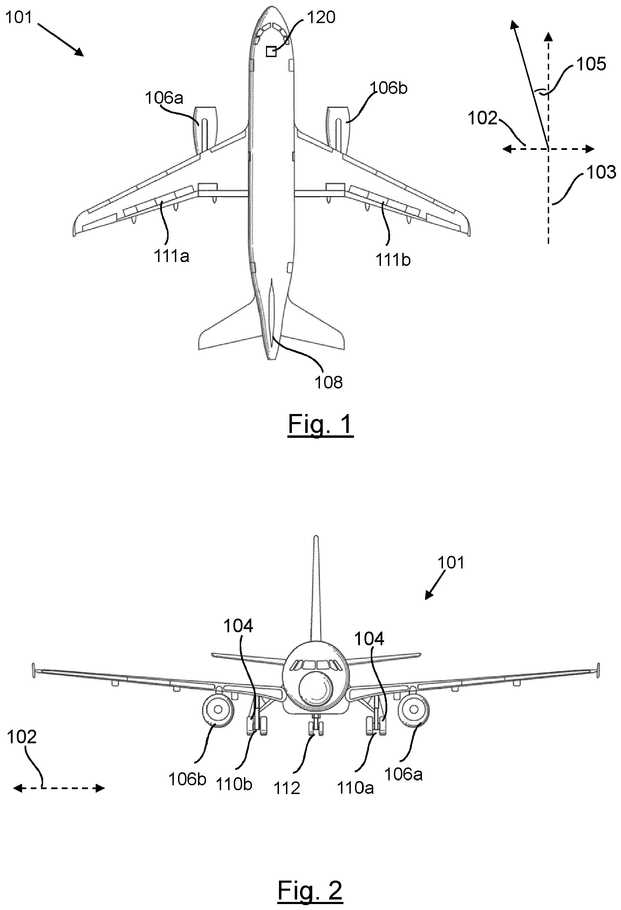

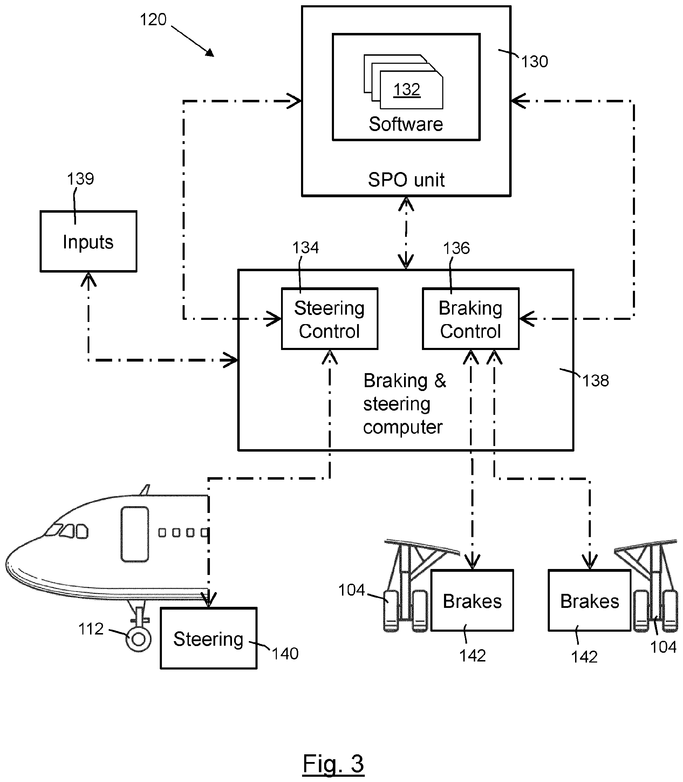

Figure 1 shows a top down view of an example aircraft 101 according to an embodiment of this invention and Figure 2 shows the same aircraft 101 from the front. The aircraft 101 comprises a ground manoeuvre control system 120 as described in relation to Figure 3. A dashed line 102 indicates the lateral direction in relation to the aircraft. Any reference to "lateral movement" in relation to the illustrated embodiments refers to the component of movement of the aircraft in the direction of line 102. Dashed line 103 indicates the longitudinal axis of the aircraft. Any reference to "longitudinal movement" in relation to the illustrated embodiments refers to the component of movement of the aircraft along axis 103. The aircraft 101 is a commercial passenger jet. The aircraft 101 includes two sets of main landing gear ("MLG"), which are not steerable, each being in the form of two wheels on a common axle (four MLG wheels in total for the aircraft). There is a port-side wheel brake set 110a (on the right-hand side of Figure 2) for the port main landing gear wheels 104 and a starboard-side wheel brake set 110b (on the left-hand side of Figure 2) for the starboard main landing gear wheels 104. The aircraft 101 also includes two nose wheels 112 on a common axle, which forms part of the nose landing gear ("NLG") and associated nose-wheel steering mechanism. The aircraft 101 also includes engines 106a and 106b, a rudder 108 and spoilers 111a and 111b.

The engines 106a and 106b, the spoilers 111a and 111b, and the wheel brakes 110a and 110b, can be used by flight crew (e.g. a pilot) to control the longitudinal movement of the aircraft along a runway during ground manoeuvres. The rudder 108, the nose wheel 112 steering and the wheel brakes 110a and 110b can be used by the pilot to control the lateral movement of the aircraft along the runway during ground manoeuvres. At high groundspeeds lateral control under the pilot's direction may be best provided by the rudder pedals, whereas at lower groundspeeds, steering using the nose wheel only may be preferred by the pilot. At lower groundspeeds, wheel braking is the dominant mechanism for decelerating the aircraft.

As noted above, the aircraft of the embodiment shown in Figures 1 and 2 includes an aircraft ground manoeuvre control system 120 which is also shown in Figure 3. The control system 120 comprises a "single pilot operations" unit (or SPO unit) 130, for use when the aircraft is being operated in a single pilot operation mode (which may be the only mode the aircraft is ever used in, or may be one of several modes, including for example a crewless mode and a multi-pilot mode). The SPO unit 130 in this embodiment has the single function of assisting a pilot in the event of total failure of wheel brakes on one side of the aircraft. In this embodiment, a total failure of wheel brakes on one side of the aircraft happens when the aircraft wheel brakes on either of the port-side MLG wheels or the star-board side are unable to respond to a command for braking, so that no braking is available on that side of the aircraft, whereas the wheel brakes for the other side are still able to respond. Such a failure may happen for example if there is a hydraulic fluid pipe rupture at a critical point. Another failure case may occur when all tyres on one side of the aircraft burst. Other failure cases may also exist. In the event of such a failure case, on an aircraft without the benefit of the present embodiment, if the pilot commands application of the MLG brakes a moment force will cause the aircraft to yaw and deviate from an intended heading. In some scenarios this could cause the aircraft to veer off a runway, unless evasive action is taken by the pilot. Lateral excursion from a runway above a certain speed (e.g. 30 or 60 knots) can be deemed to be a catastrophic event, and therefore very important to avoid.

When an aircraft is in a SPO mode, there is a desire to provide more automation and/or to provide further and better safety systems to assist the single pilot operating the aircraft. Some failure cases may be more easily dealt with by a team of two or more flight crew members. There is also the need for an aircraft operating in SPO mode to be resilient to pilot incapacitation.

In this embodiment, the SPO unit 130 responds to a detected total failure of wheel brakes on one side of the aircraft by commanding a NLG steering demand that counteracts, at least in part, the yaw moment induced on the aircraft when braking is applied to the faulty brake system(s) of the aircraft. The braking applied, as a result of the brake failure, causes uncommanded *differential* braking, and a consequential yaw moment on the aircraft which would, if no other action is taken, cause the aircraft to steer away from its intended heading. The SPO unit 130 is a computer system (including a part of a computer system) suitably programmed with software 132, which interacts with the steering control functional block 134 and the braking control functional block 136 of the aircraft's braking and steering computer system 138. In normal use (no failure mode triggered) the steering control block 134 and the braking control block 136 will perform their normal functions of controlling steering of the NLG wheel and braking of the MLG wheels wholly independently of each other. The steering control block 134 outputs signals to the NLG steering actuators of the NLG steering system 140, and receives signals from the NLG steering system 140, for example confirming the angular (steering) position of the NLG wheel 112. The braking control block 136 outputs signals to the actuators of the brakes 142 for the MLG wheels 104, and receives signals regarding the wheels and/or brakes 142, for example confirming the amount of braking applied, tyre pressures and wheel speed. The braking and steering computer system 138 thus controls the MLG brakes and NLG steering in response to various inputs 139 which may for example include a pilot-originating command to steer the NLG and/or to apply the brakes to the MLG wheels.

In use, there may be a brakes failure in response to which the SPO unit 130 responds. In such a case, the SPO unit 130 receives data (or a signal, or other indication) from the braking and steering computer 138 that the wheels on one side of the aircraft have failed, resulting in no braking being available. Such a failure may for example be detected as a result of the braking and steering computer system 138 performing functional monitoring by processing the tyre pressure / wheel speed data received, and possibly other data, to determine whether a fault or failure has occurred. When there a failure is so detected, the system takes an appropriate sanction inside the computer and also outputs information to other systems, for example flight warning, to provide an appropriate indication to the flight crew. In the event that there is a fault on one of the port-side and starboard-side brakes that is so detected the SPO unit 130 responds as follows.

A command for wheel braking is received by the braking and steering computer system 138. The braking control block 136 outputs a braking command to the MLG brakes 142. The commanded level of braking is reported by the braking control block 136 to the SPO unit 130. In response to these inputs, the SPO unit 130 causes the steering control block 134 to issue a command to the NLG to rotate to compensate for the asymmetric braking that is caused by the combination of the braking applied to the MLG brakes 142 and the fault/failure on one side only. In the event for example of no braking being available on the port side, the asymmetric braking caused by applying brakes only on the starboard side will of itself cause the aircraft to turn towards the starboard side, with the aircraft undergoing rotational movement about a vertical axis in a clockwise direction when viewed from above (otherwise known as yawing). This may be considered as being a case of uncommanded differential braking. (It will be understood that in other scenarios a flight crew may apply different levels of braking on the MLG wheels on one side of the aircraft in comparison to the MLG wheels on the other side of the aircraft, so as to apply differential braking on purpose, so as to assist in turning or steering the aircraft.) To counteract the fault-induced (i.e. inadvertent/unintended) differential braking, the NLG wheel is rotated anticlockwise towards the port-side. Thus, in effect, the SPO unit on detecting the failure of the brakes automatically steers the NLG to compensate for the consequential asymmetrical braking of the MLG wheels.

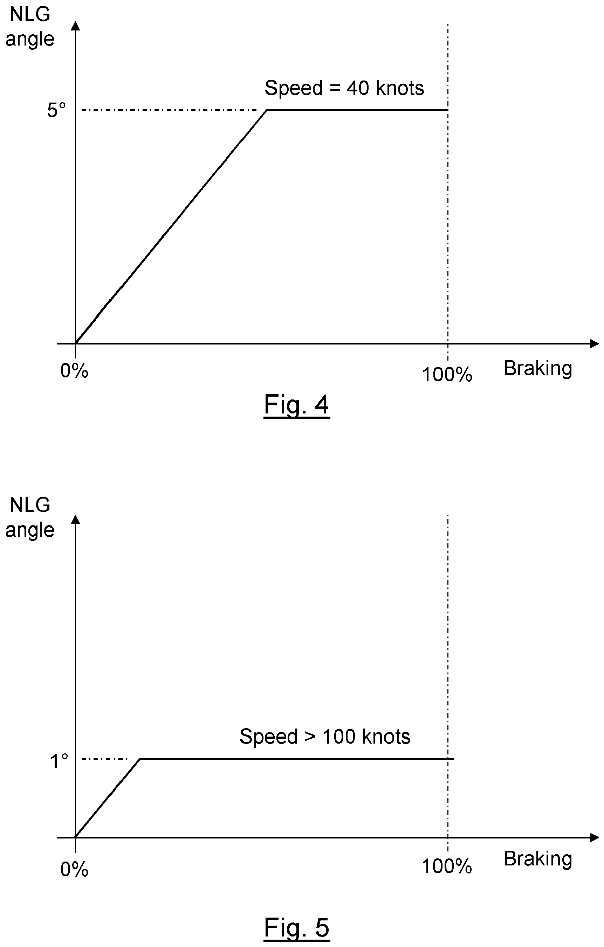

The effectiveness and safety of NLG steering is dependent on aircraft groundspeed. The amount of rotation of the NLG steering needed to compensate for asymmetric braking is determined by the SPO unit 130 in dependence on both the aircraft speed and the amount of braking commanded. The angular deflection from neutral is represented in Figure 1, as the angle labelled 105 (in the drawing this being a negative number of degrees from the 0 degrees heading of straight ahead). There is a maximum angular deflection from neutral of 5 degrees allowed to be commanded by the SPO unit 130 in any event (i.e. so that the NLG may be steered at any angle between -5 and +5 degrees, but no angles outside that range). At high runway speeds (e.g. of more than 100 knots) the maximum angular deflection is reduced to 1 degree. There may be a graduation of maximum angle as a linear relationship so that the maximum angular deflection reduces from 5 degrees to 1 degree as the speed increases from, say, 50 knots to 100 knots (so that at 75 knots, the maximum deflection would be 3 degrees, for example). Subject to the maximum permitted angle dictated by aircraft speed, the angle of steering commanded also depends on the level of braking commanded. If full braking is commanded then the maximum amount of steering of the NLG permitted at the aircraft's speed is commanded. At a reduced level of braking commanded, the steering is reduced. For example, if 10% braking is commanded, the NLG wheel may be automatically steered to 0.5 degrees to compensate for asymmetric braking. If 20% braking is commanded, the NLG wheel may be automatically steered to 1 degree to compensate for asymmetric braking. If 50% braking is commanded, the NLG wheel may be automatically steered to 2.5 degrees, but only if the speed of the aircraft is low enough to permit that. The amount of automatic steering may be such that within a range of braking from a certain threshold to maximum braking, the angle of steering will always be the maximum permitted. In certain scenarios, the steering commanded by the SPO unit 130 will not be sufficient to counteract completely the turning motion of the aircraft caused by asymmetric braking, but will instead compensate for it in part. The graphs shown in Figure 4 and 5 show schematically a possible relationship between the NLG angle commanded by the SPO unit 130 in response to the braking demand, when the aircraft speed is 40 knots (Figure 4) and when the aircraft speed is 100 knots or higher (Figure 4).

It will be seen that aircraft ground manoeuvre control system 120, including the SPO unit 130 in particular, is configured to assist in an automated response to brake failures when an aircraft is moving at speed on a runway and/or in taxiing manoeuvres. This can facilitate operations with reduced flight crew (e.g. fewer pilots, single pilot operations, and possibly pilotless operations) and/or function as an enhanced safety feature, for example in the event of incapacity of the pilot(s).

The SPO unit 130 may be provided as software on one or more computer systems already present on a legacy aircraft. Such a legacy aircraft may include a braking and steering computer system having a steering control block and a braking control block already. The SPO unit may introduce very little extra complication when being integrated on an aircraft, whether that aircraft is a pre-existing aircraft, e.g. already having been in-service, being retrofitted with an SPO unit 130, whether that aircraft is to be manufactured according to designs modified from those of a legacy aircraft, or otherwise. For example, the present embodiment is able to use existing signals that are used to generate the alerts on an aircraft of the prior art (e.g. brake-fault detected) and/or those signals / data that would normally provide information to the flight crew, such as aircraft heading, groundspeed and the like.

Figure 5 shows a flow diagram 200 showing an example method of controlling NLG steering of an aircraft moving on a runway according to a second embodiment. The method includes a step (box 201) of detecting failure of all wheel brakes on a first side of the aircraft, being the port-side or the starboard-side, the wheel brakes on the opposite side (a second side) still being at least partly operational. Then (or, in other cases, possibly before this step 201) there is a step (box 203) in which a pilot issues a wheel braking command causing a braking force to be applied to the MLG wheels of the aircraft. As a result of the failure of the brakes on the first side of the aircraft, braking is applied only to the MLG wheels on the second side, which results in an asymmetry of braking force being applied to the wheels of the aircraft (step represented by box 205). The asymmetry of braking creates a moment force (about a vertical axis) which urges the aircraft to turn towards the second side. This asymmetry of braking is however compensated for by automatically performing the step represented by box 207. This compensating step 207 is performed immediately after the braking command is issued or possibly substantially at the same time. In step 207, asymmetry of braking is compensated for by steering the NLG wheel towards the first side. The automated steering of the NLG wheels may compensate fully or in part for the asymmetry of braking force. In order to not over-complicate the control systems required on the aircraft to put this method into effect, the automated compensating of the asymmetry of braking force is limited to changing the steering angle of the NLG wheel. According to this embodiment, rudder control is not modified, as part of the method.

An advantage of the embodiments described above is that, as a result of its lack of complication and its use of existing systems and data on the aircraft, it may easily retrofitted onto an existing aircraft.

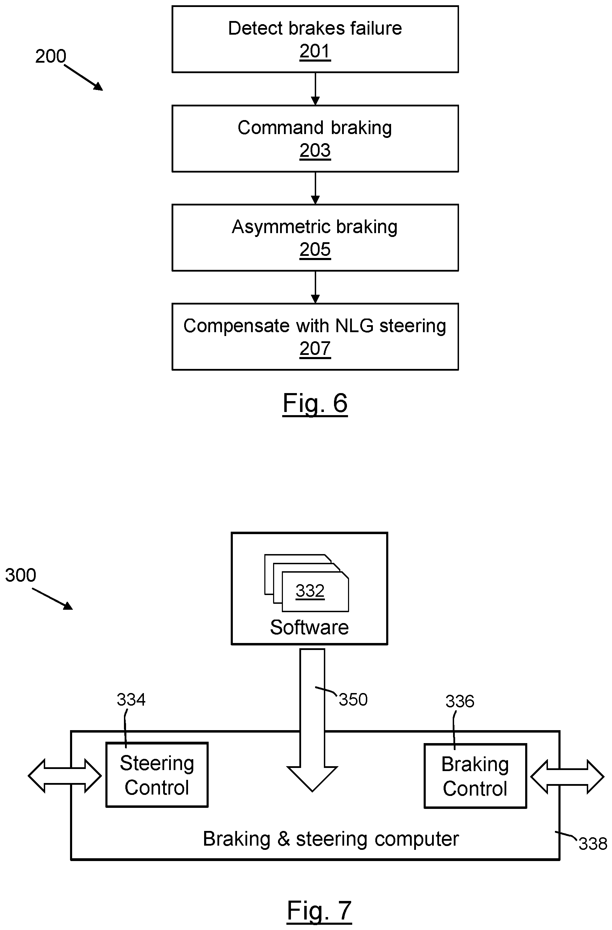

Figure 6 illustrates a method 300 of retrofitting an embodiment of the invention onto an existing aircraft so as to convert the aircraft into one in accordance with a further third embodiment of the present invention. The pre-existing systems on the aircraft already include a braking and steering computer system 338 having various computer-implemented modules including an independent steering control block 334 and an independent braking control block 336, substantially the same as described above in relation to the first embodiment. The method includes installing (the step illustrated by arrow 350) software onto the braking and steering computer system so as to cause the braking and steering computer system 338 to include the functionality of the SPO unit of the first embodiment and also to perform the method of the second embodiment. Both the steering control block 334 and the braking control block 336 receive inputs and send outputs, as described above. The software 332 once installed causes a new interaction between the steering control block 334 and the braking control block 336 such that the steering control block 334 causes the NLG to steer to compensate for faulty braking on one side of the aircraft notified to and/or by the braking control block 336. Thus it will be seen that the SPO unit of the first embodiment could alternatively be embedded in software as an integrated element of the braking and steering computer.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In the event that the pilot, or other system of the aircraft, commands rotation of the NLG it may be that such commands are added to the amount of NLG steering commanded by the SPO unit. This may still be subject to the maximum limits imposed either by the SPO unit or other systems of the aircraft that limit the angular (steering) position of the NLG wheel.

The SPO unit may form a part of a larger single pilot operations computer system that enables other functionality appropriate or of benefit for single pilot operations of the aircraft.

The SPO unit could be embedded in software as an integrated element of a flight control computer of the aircraft, with appropriate data exchange with the braking and steering computer.

Embodiments of the invention may also be used to compensate for a failure of the MLG brakes on one side of the aircraft in the form of constant braking being applied without the brakes being able to be released.

The SPO unit is described above as being for use in supporting single pilot operations. Other embodiments are envisaged for use during normal operations, for example to limit the severity of an event associated with a loss of braking on a single gear, given that an automated system may be able to react faster and more appropriately than flight crew.

The benefit of the embodiments may also have application on a taxiway in addition to on a runway.

The term 'or' shall be interpreted as 'and/or' unless the context requires otherwise.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A control system for use with an aircraft, the system being configured to
detect a failure of a part of the braking system of the aircraft that, without other action being taken, would lead to differential braking being applied in response to a command for non-differential braking being issued, and
in response to both (a) the detection of such a failure and (b) a command for braking being issued, automatically steering a nose landing gear wheel to compensate, at least in part, for the yawing moment caused by the braking applied to the wheels.

2. A control system according to claim 1, wherein the amount of automatic steering of the nose landing gear wheel commanded by the control system is determined in dependence on the level of braking commanded, for example the amount of automatic steering being in proportion to the level of braking commanded.

3. A control system according to any preceding claim, wherein the amount of automatic steering of the nose landing gear wheel commanded by the control system is determined in dependence on the speed of the aircraft.

4. A control system according to any preceding claim, wherein the amount of automatic steering of the nose landing gear wheel commanded by the control system is subject to a maximum angular deflection from the neutral rotational position of the nose landing gear wheel, for example the maximum angular deflection depending on the speed of the aircraft.

5. A control system according to claim 4, wherein the maximum angular deflection of the nose landing gear wheel is a first value for speeds below a first threshold value, and a second value for speeds above a second threshold value.

6. An aircraft, for example an aircraft configured for single pilot operations or no-pilot operations, comprising a control system according to any preceding claim.

7. An aircraft according to claim 6, wherein the aircraft comprises a steering control module and a separate braking control module and the control system interacts with, or comprises at least part of, both the steering control module and a separate braking control module.

8. An aircraft according to claim 7, wherein the steering control module of the aircraft controls other aspects of the steering of the nose landing gear wheel and the braking control module controls other aspects of the braking of the main landing gear wheels, such other aspects of the steering being wholly independent of such other aspects of the braking.

9. An aircraft according to any of claims 6 to 8, wherein the function of the control system at least insofar as it causes automatic steering of the nose landing gear wheel is provided in software.

10. A method of controlling the steering of an aircraft while the aircraft is moving along the ground comprising the steps of
detecting failure of all wheel brakes on a first side of the aircraft, being the port-side or the starboard-side, the wheel brakes on the opposite side still being at least partly operational,
issuing a wheel braking command causing a braking force to be applied to the aircraft, which results in an asymmetry of braking force being applied to the wheels on the opposite side as compared to the first side, and
a control unit automatically causing steering of the nose landing gear wheel towards the first side, thus compensating at least in part for the asymmetry of braking force.

11. A method according to claim 10, wherein the automatic compensating of the asymmetry of braking force is limited to changing the steering angle of the nose landing gear wheel.

12. A method according to claim 10 or 11, performed with the use of a control system according to any of claims 1 to 9.

13. A computer program product comprising instructions which, when the program is executed by a system comprising a suitable computer or programmable control unit, cause the system to be in accordance with the control system of any of claims 1 to 9 or cause the system to carry out one or more of the steps of the method of any of claims 10 to 12.

14. A computer program product according to claim 13, which when implemented causes interaction between a steering control module and a braking control module, both the steering control module and the braking control module be at least part implemented by one or more on-board computers, the steering control module being configured to receive inputs and as a result to output a signal that controls or influences the angle of steering of a nose landing gear wheel of the aircraft, and the braking control module being configured to receive inputs and as a result to output a signal that controls or influences the amount of braking applied to one or more main landing gear wheels of the aircraft.

15. A method of converting an existing aircraft into an aircraft according to any of the claims 6 to 9, wherein the existing aircraft incudes
a steering control module which is configured to receive inputs and as a result to output a signal that controls or influences the angle of steering of a nose landing gear wheel of the aircraft, and
a braking control module which is configured to receive inputs and as a result to output a signal that controls or influences the amount of braking applied to one or more main landing gear wheels of the aircraft, the braking control module being functionally independent of the steering control module,
and the method includes the step of installing software in the form of a computer program product according to claim 14 such that when installed the software causes interaction between the steering control module and the braking control module thus providing the function of the aircraft as claimed.
